# EUROPEAN PATENT SPECIFICATION

(11) **EP 1 316 173 B1**
(45) Date of publication and mention of the grant of the patent: **21.01.2009**
(21) Application number: 01955742.0
(22) Date of filing: 14.08.2001
(51) Int. Cl.: H04L 12/00, H04N 7/173

(54) **APPARATUS FOR PROVIDING A MULTIPLE INTERNET CONNECTION SERVICE USING A HYBRID FIBER COAXIAL CABLE NETWORK**
VORRICHTUNG ZUR BEREITSTELLUNG EINES MEHRFACH-INTERNETVERBINDUNGSDIENSTES UNTER VERWENDUNG EINES HYBRIDEN FASERKOAXIALKABELNETZES
APPAREIL DESTINE A FOURNIR UN SERVICE DE CONNEXION INTERNET MULTIPLE, UTILISANT UN RESEAU HYBRIDE FIBRE OPTIQUE-CABLE COAXIAL

(30) Priority: 14.08.2000 KR 2000047051
(43) Date of publication of application: 04.06.2003
(73) Proprietor: Hanmi Pharm. Co., Ltd., Hwasuong-gun, Kyungki-do 445-910 (KR)
(72) Inventor: SONG, Chul-Ho, Seoul 137-070 (KR)
(74) Representative: Lippich, Wolfgang
(86) International application number: PCT/KR2001/001382
(87) International publication number: WO 2002/015468

(56) References cited:
- WO-A1-99/30449
- WO-A2-00/28712

## Description

### Field of the Invention

The present invention relates to a communication system; and, more particularly, to an architecture for providing a multiple Internet connection service by using a hybrid fiber coaxial cable network, wherein the multiple internet connection is obtained by splitting a frequency band used in upstream.

### Background of the Invention

Cable television networks provide cable television services to a large number of subscribers over a large geographical area. In many cable television markets, the infrastructure and topology of cable systems tend to include fiber optics as part of their signal transmission component. This has accelerated the pace at which the cable industry has taken advantage of the inherent two-way communications capability of cable systems. The cable industry is now poised to develop reliable and efficient two-way transmissions of digital data over its cable lines at speeds orders of magnitude faster than those available through telephone lines, thereby allowing its subscribers to have access to digital data for uses ranging from internet access to cable commuting.

The Internet, a world-wide-network of interconnected computers, provides multi-media contents including audio, video, graphics and text that require a large bandwidth for downloading and viewing. Most Internet Service Providers (ISPs) allow customers to connect to the internet via a serial telephone line from a Public Switched Telephone Network (PSTN) at data rates of 14,400 bps, 28,800 bps, 33,600 bps, 56,000 bps and others that are much slower than those available on a coaxial cable or HFC cable system on a cable television network, e.g., about 10 Mbps to 30 Mbps.

With the explosive growth of the Internet, many customers have coveted to use the larger bandwidth of a cable television network to connect to the Internet and other computer networks. Cable modems offer customers higher speed connectivity to the Internet, an intranet, Local Area Networks (LANs) and other computer networks via cable television networks. These cable modems currently support a data connection to the Internet and other computer networks via a cable television network with a "downstream" data rate of 30 Mbps, which is a much faster data rate than the rate that can be supported by serial telephone line used by a modem.

In recent years, Internet Service Provider (ISP) allows subscribers to connect to the Internet via the HFC cable network to thereby reduce infrastructure cost. Furthermore, more than one ISP provides data service, e.g., Internet connection, for subscribers using the same HFC cable network.

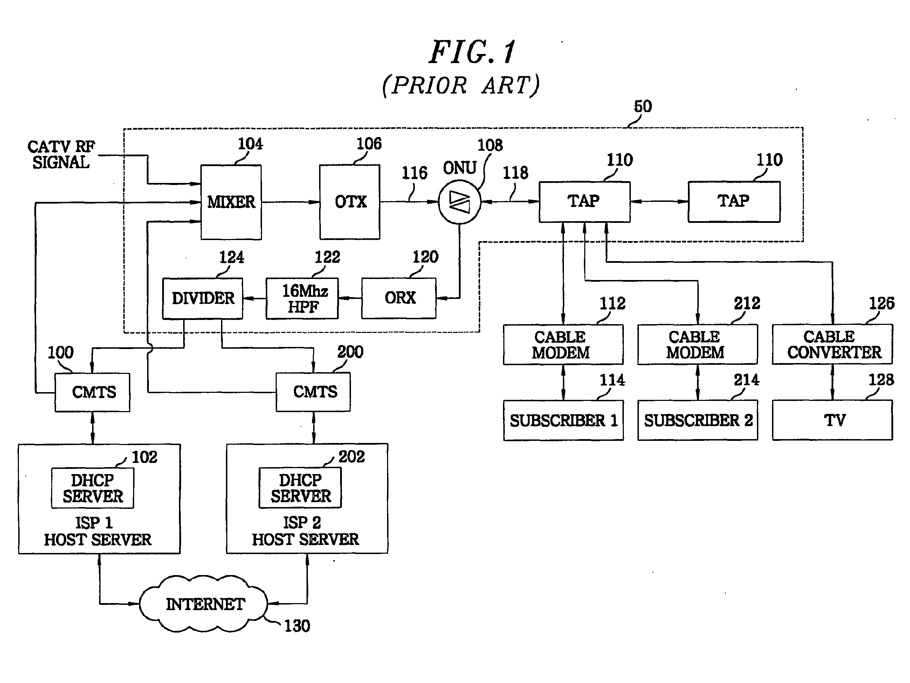

Fig. 1 illustrates a block diagram of a conventional two-way hybrid fiber-coaxial (HFC) cable system utilizing a cable modem for digital data transmission. The system contains cable modem termination systems (CMTSs) 100 and 200, dynamic host configuration protocol (DHCP) servers 102 in ISP1 host server and 202 in ISP2 host server, connected to the CMTSs 100 and 200, respectively, for dynamically assigning IP addresses and configuration parameters to respective subscribers 114 and 214 in an IP network, a transmission line 50, e.g. a hybrid fiber coaxial line, a plurality of cable modems 112 and 212 and subscriber premise equipments 114, 214 and 128.

The transmission line 50 includes a mixer 104 for mixing a cable TV RF signal with each radio frequency (RF) data signal from the CMTSs 100 and 200, an optical transmitter (OTX) 106 for converting the mixed RF signal into an optical signal, an optical network unit (ONU) 108 for converting the optical signal back to the mixed RF signal in downstream and an RF signal from each subscriber premise 114 to an optical signal in upstream, a tap 110 for distributing the transmitted mixed RF signal to respective subscriber premise equipment 114 and 214 via cable modems (CM) 112 and 212, respectively, ORX 120 for converting the optical signal from the ONU 108 back to the RF signal, a 16 MHz high pass filter 122 for filtering out frequency band equal to or less than 16 MHz and a divider 124 for distributing the filtered RF signal to CMTSs 100 and 200.

The primary functions of each of CMTS 100 and 200 are (1) receiving a signal from data network 130, e.g., Internet, and converting the format of the signal, e.g., a microwave signal to an electrical signal suitable for transmission over the cable network; (2) providing appropriate media access control (MAC) level packet headers for data received by the cable system, and (3) modulating and demodulating the data to and from the cable system.

Each of DHCP servers 102 and 202 allows for a client to automatically obtain an IP address for a fixed period of time (lease), allowing for reassignment of an expired IP address to a different client and additional configuration parameters for client operation.

The mixer 104 mixes a cable TV RF signal with a modulated RF signal to output a mixed RF signal. Then, the mixed RF signal is converted to an optic signal at the OTX 106 to be transmitted to the ONU 108 over the fiber optic line 116. The ONU 108 converts the transmitted optic signal to the mixed RF signal and transmits the mixed RF signal to the tap 110 through the coaxial cable 118. The tap 110 distributes the mixed RF signal to the subscriber premises 114, 214 and 128 via the cable modems 112 and 212 and a cable converter 126, respectively.

The cable modem 112 demodulates the modulated RF signal to digital signal in data downstream and then feeds the digital data to the subscriber premise 114. On a return path, i.e., in data upstream, the operations are reversed. The digital data are fed to the cable modem which converts them to a modulated RF signal. Once the CMTS receives the RF signal, it demodulates the RF signal and transmits the digital data to the host server.

The DHCP server 102 based on a dynamic host configuration protocol automatically allocates an IP address to the subscriber premise equipment 114. Details of an allocating process are described hereinafter.

In the cable system, digital data are carried over radio frequency (RF) carrier signals. The CMTS 100 or 200 converts the digital data to a modulated RF signal that is carried over the transmission line 50 to the subscriber premise 114 or 214 in downstream. Each CMTS in the network has subinterfaces each of which is configured to be associated with a separate ISP. Each subinterface is assigned a special forwarding table, e.g., Cisco-VRF, which contains routes only for a particular ISP associated with this subinterface.

CM 112 or 212 which is connected to the CMTS 100 or 200 via transmission line 50, respectively, is associated with a specific ISP, e.g., ISP1 or ISP2, basically, by the following procedure:
1. Each CM 112 or 212 boots at the start and sends DHCP request to the CMTS 100 or 200 that relays it to the DHCP server 102 or 202.
2. After a MAC address-based authentication procedure known in the art is performed, the DHCP server 102 or 202 sends back to the CMTS 100 or 200 the allocated IP address belonging to the requested ISP.
3. The CMTS 100 or 200 assigns a corresponding subscriber identification (ID) to each CM 112 or 212, and associates that subscriber ID with the subinterface that is assigned to the corresponding ISP, e.g., ISP1 or ISP2 to which that IP address belongs.

Through the above procedure, each CM 112 or 212 is connected to the corresponding ISP, e.g., ISP1 or ISP2.

There is, however, a problem for the cable modem 112 to be connected correctly to the corresponding ISP because traffics from the plurality of cable modems can interfere with each other by using same frequency band, e.g., 5 ∼ 42 MHz, in upstream. Therefore, there is a need for dividing the upstream frequency band so that the ISP correctly recognizes its signal from the corresponding subscriber.

The document WO 0028712A2 describes a method for communicating information in a time division multiple access system from a subscriber to a headend via a hybrid fiber coaxial network. The fiber coaxial network enables the transmission of data between the headend, which includes a cable modem termination system, and homes which are equipped with a cable modem. Such hybrid fiber coaxial networks are commenly utilized to provide broadband internet access to subscribers.

### Summary of the Invention

It is, therefore, an object of the present invention to provide a multiple Internet connection service using a hybrid fiber coaxial cable network, wherein the multiple Internet connection is obtained by splitting a frequency band used in upstream.

In accordance with the present invention, there is provided a system for providing a multi Internet connection in a cable network system, comprising: a first and a second cable modem (CM) for modulating digital data signal from subscribers to radio frequency (RF) signal; a first filtering means, connected to the first CM, for filtering the modulated RF signal from the first CM; a transmission means for transmitting the filtered modulated RF signal and the modulated RF signal from the second CM; a' second filtering means, connected to the transmission means, for filtering the modulated RF signal transmitted through the transmission means to thereby pass the filtered modulated RF signal from the first filtering means; a first cable modem termination system (CMTS), connected to the second filtering means, for demodulating the filtered modulated RF signal filtered by the second filtering means back to the digital data signal, scanning the digital data signal and identifying a registered subscriber to thereby connect the subscriber to a corresponding host server; and a second CMTS for demodulating the transmitted modulated RF signal back to the digital data signal and scanning the digital data signal and identifying a registered subscriber to thereby connect the subscriber to a corresponding host server.

### Brief Description of the drawings

The above and other objects and features of the present invention will become apparent from the following description of a preferred embodiment given in conjunction with the accompanying drawings, in which:
Fig. 1 represents a block diagram of a conventional two-way hybrid fiber-coaxial (HFC) cable system utilizing a cable modem for digital data transmission; and
Fig. 2 is a block diagram of a two-way hybrid fiber-coaxial (HFC) cable system utilizing a cable modem for digital data transmission in accordance with the present invention.

### Detailed Description of the Preferred Embodiments

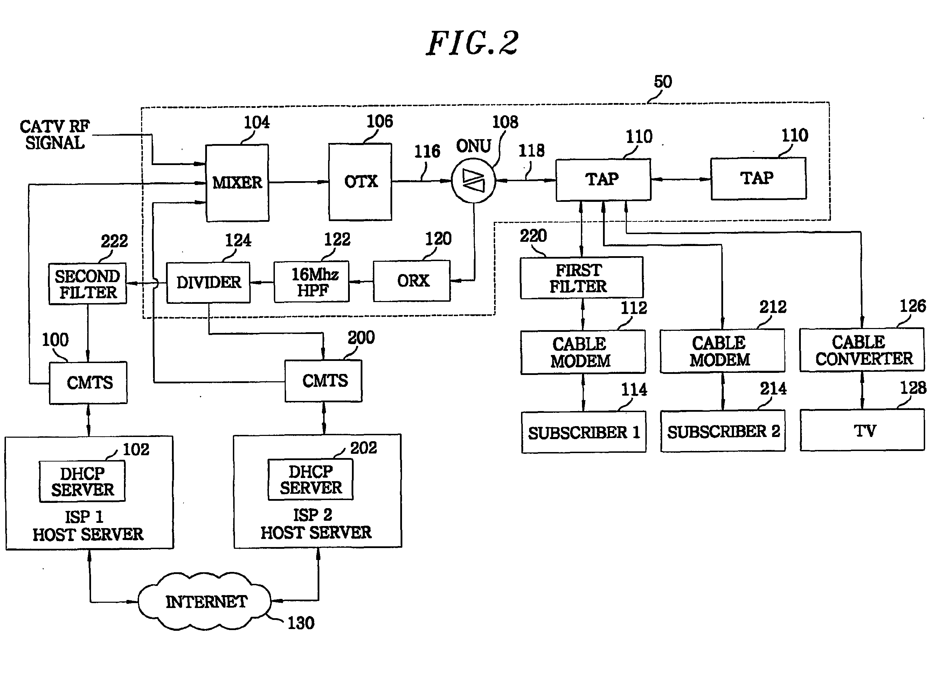

Referring now to Fig. 2, there is a block diagram of a two-way hybrid fiber-coaxial (HFC) cable system utilizing a cable modem for digital data transmission according to the present invention. The system allows each subscriber registered to different ISP host servers to correctly connect the corresponding ISP server through frequency band split mechanism in data upstream, i.e., from a cable modem to a CMTS. The frequency band split mechanism incorporates filters on return path, i.e., on upstream path, in the cable system. The filters may be high pass filters (HPFs), band pass filters (BPFs) or low pass filters (LPFs), but be preferably the HPFs.

The system comprises cable modem termination systems (CMTSs) 100 and 200, a dynamic host configuration protocol (DHCP) server 102 in host server ISP1 and 202 in host server ISP2, connected to CMTS 100 and 200, respectively, for dynamically assigning IP addresses and configuration parameters to subscribers 114 and 214 in the cable system, a transmission line 50, e.g., hybrid fiber coaxial (HFC) line, a first and a second filter 220 and 222, cable modems 112 and 212, a cable converter 126 and subscriber premise equipments 114, 214 and 218.

The transmission line includes a mixer 104 for mixing a cable TV RF signal with a radio frequency (RF) data signal from the CMTSs 100 and 200, an optical transmitter (OTX) 106 for converting the mixed RF signal into an optical signal, an optical network unit (ONU) 108 for converting the optical signal back to the mixed RF signal in downstream and converting an RF signal from each of the subscriber premises 114 and 214 to an optical signal in upstream, a tap 110 for distributing the transmitted mixed RF signal to each of the subscriber premise equipment 114 and 214 via the cable modems 112 and 212, respectively, and an optical receiver (ORX) 120 for converting the optical signal from the ONU 108 back to the RF signal.

In the cable system, digital data are carried over radio frequency (RF) carrier signals.

The CMTSs 100 and 200 convert the digital data to a modulated RF signal which is carried over the fiber and coaxial lines to the subscriber premises 114 and 214 in downstream. The cable modems 112 and 212 then demodulate the RF signal and feed the digital data to the subscribe premise equipments 114 and 214. On a return path, i.e., on upstream, the operations are reversed except that an upstream signal from the cable modem 112 is filtered by the second filter 222, e.g., 32 MHz high pass filtering.

The primary functions of each of the CMTSs 100 and 200 are (1) receiving a signal from data network 130 and converting the format of the signal, e.g., a microwave signal to an electrical signal suitable for transmission over the cable network, (2) providing appropriate media access control (MAC) level packet headers for data received by the cable system and (3) modulating and demodulating the data to and from the cable system.

The DHCP server 102 or 202 allows the subscriber 114 or 214 to automatically obtain an IP address for a fixed period of time (lease), allowing for reassignment of an expired IP address to a different client and additional configuration parameters for client operation. Details of IP connection schemes will be described later.

The mixer 104 mixes a cable TV RF signal with a modulated RF signal to output a mixed RF signal. Then, the mixed RF signal is converted to an optic signal at the OTX 106 to be transmitted to the ONU 108 over the fiber optic line 116. The ONU 108 converts the transmitted optic signal to the mixed RF signal and transmits the mixed RF signal to the tap 110 through the coaxial cable 118. The tap 110 distributes the mixed RF signal to the subscriber premise 114 via the cable modem 112.

The portion of bandwidth reserved for upstream signals normally ranges from 5 to 42 MHz. Some of this frequency band may be allocated for set-top boxes, pay-per-view, and other services provided over the cable system, e.g., Internet service.

In the present invention, it is assumed for simplicity that the subscriber1 114 is registered to a host server of ISP 1 and the subscriber2 214 is registered to a host server of ISP2.

The cable modem 112 or 212 demodulates the modulated RF signal to a digital signal in data downstream and then feeds the digital data to the subscriber 114 or 214. On a return path, i.e., in data upstream, the operations are reversed. The digital data is fed to the cable modem to be converted to a modulated RF signal. Once the CMTS receives the RF signal, the CMTS demodulates the RF signal into digital data and transmits the digital data to a host server.

The DHCP server 102 based on a dynamic host configuration protocol automatically allocates an IP address to the subscriber premise equipment 114. Details of an allocating process are described hereinafter.

First, to identify DHCP server 202, the subscriber2 214 broadcasts a first DHCPDISCOVER packet. The first DHCPDISCOVER packet is modulated to a first RF signal by the cable modem 212 and then forwarded to the divider 124 through the transmission line 50. The first transmitted RF signal is distributed to the CMTS 100 through the second filter 222, e.g., 32 MHz high pass filter, and to the CMTS 200.

If the carrier signal for the packet has a frequency of higher than 32 MHz, the CMTS 100 receives the first DHCPDISCOVER packet. If the CMTS 100 accepts the first DHCPDISCOVER packet, then the CMTS transmits the packet to the DHCP server 102. The CMTS 100 compares an already registered subscriber ID with the first DHCPDISCOVER packet whether it is to be accepted or not. Since the first DHCPDISCOVER packet is not registered to the CMTS 100, the packet is not accepted.

The CMTS 200 receives the first DHCPDISCOVER packet and, if it accepts the first DHCPDISCOVER packet, then the CMTS 200 transmits it to the DHCP server 202. The CMTS 200 compares an already registered subscriber ID with the first DHCPDISCOVER packet to determine whether the first DHCPDISCOVER packet is to be accepted or not. Since the first DHCPDISCOVER packet is registered to the CMTS 200, the first DHCPDISCOVER packet is accepted.' The first DHCPDISCOVER packet is transmitted to the DHCP server 202.

The DHCP server 202 may respond with a first DHCPOFFER packet that includes an available IP address. The CMTS 200 receives the first DHCPOFFER packet and examines it. If the CMTS 200 accepts the first DHCPOFFER packet, the CMTS 200 forwards the packet to the subscriber2 214.

If the subscriber2 214 does not receive the first DHCPOFFER packet within a specified amount of time after broadcasting the first DHCPDISCOVER packet, it sends the packet again.

The subscriber2 214 may receive DHCPOFFER packets from other potential servers, e.g., DHCP sever 102 of ISP1. If the subscriber2 214 is configured to wait for multiple responses, it examines configuration parameters in the first DHCPOFFER packets received from several DHCP servers to decide which server should be targeted.

When the subscriber2 214 has chosen a target server, i.e., DHCP server 202, it broadcasts a first DHCPREQUEST packet. The first DHCPREQUEST packet contains the address of the target server. The CMTS 200 receives the first DHCPREQUEST packet and forwards it to all servers in ISP2 host server. Those servers examine the first DHCPREQUEST packet, and if their IP addresses differ from the value in a server IP address field of the first DHCPREQUEST packet, they reclaim the IP addresses supplied in the first DHCPOFFER packet.

The DHCP server 202 recognizes its IP address in the server IP address field, and responds to the first DHCPREQUEST packet as follows:
If the DHCP server 202 can supply requested configuration parameters, it sends a first DHCPACK packet to the subscriber2 214 through the CMTS 200. The subscriber2 214 examines the configuration parameters in the first DHCPACK packet and records the duration of the lease period. If the subscriber2 214 detects a problem with the configuration parameters, it sends a first DHCPDECLINE packet to the DHCP server 202 and issues a new DHCPDISCOVER packet. Otherwise, the subscriber 214 accepts the configuration parameters.

Through the above procedure, the subscriber2 214 is connected to the corresponding ISP2 host server.

Second, to identify DHCP server 102, the subscriber1 114 broadcasts a second DHCPDISCOVER packet. The second DHCPDISCOVER packet is modulated to a second RF signal by the cable modem 112 and then filtered by the first filter 220, e.g., 32 MHz HPF. The filtered second RF signal is forwarded to the divider 124 through the transmission line 50. The second transmitted RF signal is divided to the CMTS 100 through the second filter 222, e.g., 32 MHz high pass filter, and to the CMTS 200.

The CMTS 200 receives the packet and, if it accepts the packet, then the CMTS 200 transmits the packet to the DHCP server 202. The CMTS 200 compares an already registered subscriber ID with the second DHCPDISCOVER packet to determine whether the second DHCPDISCOVER packet is to be accepted or not. Since the second DHCPDISCOVER packet is not registered to the CMTS 200, the packet is not accepted.

The CMTS 100 receives the packet and, if it accepts the packet, the CMTS 100 transmits the packet to the DHCP server 102. The CMTS 100 compares an already registered subscriber ID with the second DHCPDISCOVER packet to determine whether the second DHCPDISCOVER packet is to be accepted or not. Since the second DHCPDISCOVER packet is registered to the CMTS 100, the packet is accepted. The second DHCPDISCOVER packet is transmitted to the DHCP server 202.

The procedure thereafter, e.g., ISP1 host server connection procedure, is similar to the above corresponding procedure, i.e., ISP2 connection, and is omitted here.

As a result, the subscriber1 114 uses the frequency band of higher than 32 MHz and the subscriber2 214 does the frequency band between 16 MHz and 32 MHz to thereby facilitate a multiple Internet connection.

While the invention has been shown and described with respect to the preferred embodiments, it will be understood by those skilled in the art that various changes and modifications may be made without departing from the scope of the invention as defined in the following claims.

## Claims

1. A system for providing a multi Internet connection in a cable network system, comprising:
a first and a second cable modem (CM) (112, 212) for modulating digital data signal from subscribers (114, 214) to radio frequency (RF) signal;
a first filtering means (220), connected to the first CM (112), for filtering the modulated RF signal from the first CM (112);
a transmission means (110), connected to the first filtering means (220) and the second CM (212), for transmitting the filtered modulated RF signal from the first filtering means (220) and the modulated RF signal from the second CM (212);
a second filtering means (222), connected to the transmission means (110), for filtering the modulated RF signal transmitted through the transmission means (110) to thereby pass the filtered modulated RF signal from the first filtering means (220);
a first cable modem termination system (CMTS) (100), connected to the second filtering means (222), for demodulating the filtered modulated RF signal filtered by the second filtering means (222) back to the digital data signal, scanning the digital data signal and identifying a registered subscriber to thereby connect the subscriber to a corresponding host server; and
a second CMTS (200) for demodulating the transmitted modulated RF signal back to the digital data signal and scanning the digital data signal and identifying a registered subscriber to thereby connect the subscriber to a corresponding host server.

2. The system of claim 1, wherein the first and the second filtering means (220, 222) are high pass filters, respectively.

3. The system of claim 1, the first and the second filtering means (220, 222) are band pass filters, respectively.

4. The system of claim 2, the first and the second filtering means (220, 222) are 32 MHz high pass filters, respectively.

5. The system of claim 3, the first and the second filtering means (220, 222) are 16 to 32 MHz band pass filters, respectively.

6. The system of claim 1, the transmission means is a hybrid fiber coaxial cable.

## Patentansprüche

1. System zum Bereitstellen einer Mehrfach-Internet-Verbindung in einem Kabelnetzsystem, umfassend:
ein erstes und ein zweites Kabelmodem (CM) (122, 212) zum Modulieren eines digitalen Datensignals von Teilnehmern (114, 214) in ein Hochfrequenzsignal (RF);
ein erstes Filtermittel (220), das mit dem ersten CM (112) verbunden ist, zum Filtern des modulierten RF-Signals vom ersten CM (112);
ein Übertragungsmittel (110), das mit dem ersten Filtermittel (220) und dem zweiten CM (212) verbunden ist, zum Übertragen des gefilterten modulierten RF-Signals vom ersten Filtermittel (220) und des modulierten RF-Signals vom zweiten CM (212);
ein zweites Filtermittel (222), das mit dem Übertragungsmittel (110) verbunden ist, zum Filtern des modulierten RF-Signals, das durch das Übertragungsmittel (110) übertragen wird, um **dadurch** das gefilterte modulierte RF-Signal vom ersten Filtermittel (220) zu übergeben;
ein erstes Kabelmodem-Abschlusssystem (CMTS) (100), das mit dem zweiten Filtermittel (222) verbunden ist, zum Demodulieren des gefilterten modulierten RF-Signals, gefiltert durch das zweite Filtermittel (222), zurück in das digitale Datensignal, Scannen des digitalen Datensignals und Identifizieren eines registrierten Teilnehmers, um **dadurch** den Teilnehmer mit einem entsprechenden Host-Server zu verbinden; und
ein zweites CMTS (200) zum Demodulieren des übertragenen modulierten RF-Signals zurück in das digitale Datensignal und Scannen des digitalen Datensignals und Identifizieren eines registrierten Teilnehmers, um **dadurch** den Teilnehmer mit einem entsprechenden Host-Server zu verbinden.

2. System nach Anspruch 1, wobei das erste und das zweite Filtermittel (220, 222) Hochpassfilter sind.

3. System nach Anspruch 1, wobei das erste und das zweite Filtermittel (220, 222) Bandpassfilter sind.

4. System nach Anspruch 2, wobei das erste und das zweite Filtermittel (220, 222) 32 MHz Hochpassfilter sind.

5. System nach Anspruch 3, wobei das erste und das zweite Filtermittel (220, 222) 16 bis 32 MHz Bandpassfilter sind.

6. System nach Anspruch 1, wobei das Übertragungsmittel ein Hybrid-Faser-Koaxialkabel ist.

## Revendications

1. Système destiné à fournir une connexion Internet multiple dans un système de réseau câblé, comprenant :
■ un premier et un deuxième modem câblé (CM) (112, 212) pour moduler un signal de données numérique provenant d'abonnés (114, 214) en un signal de radiofréquence (RF) ;
■ un premier moyen de filtrage (220), connecté au premier CM (112), pour filtrer le signal RF modulé du premier CM (112) ;
■ un moyen de transmission (110), connecté au premier moyen de filtrage (220) et au deuxième CM (212), pour transmettre le signal RF modulé filtré du premier moyen de filtrage (220) et le signal RF modulé du deuxième CM (212) ;
■ un deuxième moyen de filtrage (222), connecté au moyen de transmission (110), pour filtrer le signal RF modulé transmis par le biais du moyen de transmission (110) pour passer de ce fait le signal RF modulé filtré du premier moyen de filtrage (220) ;
■ un premier système de terminaison de modem câblé (CMTS) (100), connecté au deuxième moyen de filtrage (222), pour démoduler le signal RF modulé filtré qui a été filtré par le deuxième moyen de filtrage (222) en signal de données numérique, balayer le signal de données numérique et identifier un abonné enregistré pour connecter de ce fait l'abonné à un serveur hôte correspondant ; et
■ un deuxième CMTS (200) pour démoduler le signal RF modulé transmis en signal de données numérique et balayer le signal de données numérique et identifier un abonné enregistré pour connecter de ce fait l'abonné à un serveur hôte correspondant.

2. Système selon la revendication 1, dans lequel les premier et deuxième moyens de filtrage (220, 222) sont respectivement des filtres passe-haut.

3. Système selon la revendication 1, dans lequel les premier et deuxième moyens de filtrage (220, 222) sont respectivement des filtres passe-bande.

4. Système selon la revendication 2, dans lequel les premier et deuxième moyens de filtrage (220, 222) sont respectivement des filtres passe-haut de 32 MHz.

5. Système selon la revendication 3, dans lequel les premier et deuxième moyens de filtrage (220, 222) sont respectivement des filtres passe-bande de 16 à 32 MHz.

6. Système selon la revendication 1, dans lequel le moyen de transmission est un réseau hybride fibre optique-câble coaxial.
